# EUROPEAN PATENT APPLICATION

(11) **EP 0 720 095 A1**
(43) Date of publication of application: **03.07.1996**
(21) Application number: 94309868.1
(22) Date of filing: 28.12.1994
(51) Int. Cl.: G06F 11/14

(54) **Fault tolerant computer system**

(71) Applicant: Hewlett-Packard Company, Palo Alto, California 94304 (US)
(72) Inventor: Harry, Paul, St Andrews, Bristol BS6 5BJ (GB)
(74) Representative: Squibbs, Robert Francis

(57) **Abstract**

A software-based fault-tolerant system is provided that is organised as a plurality of recovery units (A, B, C) each made up of a live process (A/L, B/L, C/L) running on one processor (I, II, III), an arrangement (21) for logging recovery information relevant to that live process, and recovery functionality (21) which in the event of failure of the live process, brings up a replacement process (A/R, B/R, C/R) on an operative processor. The system operates in a manner similar to the known "Manetho" system with the logging arrangement (21) of each recovery unit (A, B, C) maintaining a non-deterministic event record (24) recording sequencing information on the non-deterministic events experienced by all said live processes; each time the live process of the recovery unit outputs a message, the logging arrangement associates with the message, event data that comprises at least a most recent portion of its non-deterministic event record (24). In the known Manetho system, the non-deterministic event record (24) takes the form of an antecedence graph giving the complete inter-relation of the occurrence of non-deterministic events within and between recovery units. The present system, however, simply uses an antecedence vector for the event record (24), this vector being made up of a respective execution history for each live process without any cross-correlation between these histories. The antecedence vector is much easier to construct and maintain than an antecedence graph.

## Description

### Field of the Invention

The present invention relates to fault-tolerant computer systems using multiple processors where fault tolerant operation is provided by appropriately operating software; in particular, the present invention relates to fault-tolerant systems operating in a manner similar to the " Manetho" system (referenced below)

### Discussion of the Prior Art

Software-based fault-tolerant systems may be considered as organised into one or more recovery units each of which constitutes a unit of failure and recovery. A recovery unit may be considered as made up of a live process running on one processor, an arrangement for logging recovery information relevant to that live process, and recovery means, which in the event of failure of the live process, brings up a replacement process on an operative processor.

Of course, if failure of the live process due to failure of the processor running it is to be covered, then both the storage of recovery information and the recovery means itself must be separate from the processor running the live process. In this case, upon failure of the processor running the live process, the recovery means can then bring up the replacement process on a different processor (if live process failure is not due to the failure of the associated processor, the replacement process could be brought up on that processor). In fact, the processor on which the replacement process is to run is frequently pre-designated and, for convenience, this approach will be assumed in the following description.

Where a system comprises multiple recovery units, these will typically overlap in terms of processor utilisation; for example, the processor targetted to run the replacement process for a first recovery unit, may also be the processor running the live process of a second recovery unit. In fact, there may also be common resource utilisation by the recovery units in respect of their logging and recovery means.

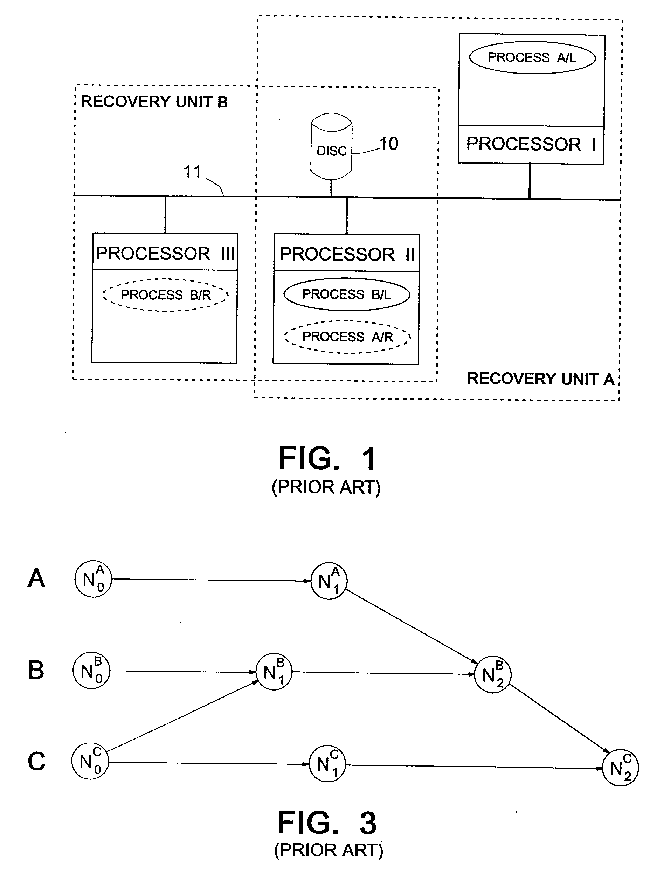

An illustrative prior-art fault-tolerant computer system is shown in Figure 1 of the accompanying drawings. This system comprises three processors I, II, III and a disc unit 10 all interconnected by a LAN 11. The system is organised as two recovery units A and B each of which has an associated live process A/L, B/L. Live process A/L runs on processor I and live process B/L runs on processor II. Recovery unit A is arranged such that upon failure of its live process A/L, a replacement process A/R will be brought up on processor II; similarly, recovery unit B is arranged such that should live process B/L fail, a replacement process B/R is brought up on processor III.

A live process will progress through a succession of internal states depending on its deterministic behaviour and on non-deterministic events such as external inputs (including messages received from other live processes, where present) and non-deterministic internal events.

When a replacement process takes over from a failed live process, the replacement process must be placed in a state that the failed process achieved (though not necessarily its most current pre-failure state). To do this, it is necessary to know state information on the live process at at least one point prior to failure; furthermore, if information is also known on the non-deterministic events experienced by the failed process, it is possible to run the replacement process forward from the state known about for the failed process, to some later state achieved by the latter process.

For a system having only one recovery unit, fault-tolerant operation is relatively simply achieved. Where speed of recovery is not critical, an approach may be used where state information on the live process is periodically checkpointed by the logging means of the recovery unit from the volatile memory of the processor running the process to stable store (typically disc storage). Upon failure of the live process, the recovery means of the recovery unit can bring up a replacement process in a state corresponding to the last-checkpointed state of the failed live process. Of course, unless checkpointing is effected at every state change, the state of the replacement process will generally be behind the actual state achieved by the live process prior to failure. This can be alleviated by having the logging means of the recovery unit securely store appropriate information on all non-deterministic events experienced by the live process between its checkpoints and then arranging for the recovery means to replay these events to the replacement process to bring it more up-to-date.

Where speed of recovery is critical, it is generally preferred to run at least one duplicate process that shadows the processing of the live process and receives the same non-deterministic events as the latter. The duplicate process effectively acts as a store of state information on the live process. The live process and its duplicate may be tightly coupled so that they are always in step, or loosely coupled with the duplicate generally lagging behind the live process. Upon failure of the live process the recovery means causes the duplicate process to take over as the replacement process; where the coupling between the live process and its duplicate is only loose, if appropriate information on the non-deterministic events experienced by the live process has been stored, the duplicate may be brought more up-to-date by using this information.

It will be apparent that the overhead involved in logging recovery information is considerably greater in arrangements where the replacement process is brought up to the state of the live process at failure. Of course, in terms of consistency of system operation, with a system having only a single recovery unit, the state in which the replacement process is brought up following live process failure does not matter (provided it is a state experienced by the failed process) to the extent that no external manifestation (output) of the state of the original live process has been produced. However, where an output has been produced, it is highly desirable that the replacement process is brought up to a state corresponding to the output having been made. To this end, before any output is made, the logging means of the recovery unit should be caused either to checkpoint the live-process state information and securely store non-deterministic event information, or in the case of a loosely coupled duplicate process to ensure that the latter has received the same non-deterministic event information as the live process. This procedure is known as 'output commit'.

Considering now the case of a system with multiple recovery units, this is more complex due to the need to ensure that following a recovery, all live processes (including the replacement process that has taken over from a failed live process) are in mutually consistent states. Of course, this is no problem if the recovery unit can put the replacement process in the same state as the failed process immediately before failure. If this is not possible (for example, because the overhead involved in providing this ability is considered too great), then it may be necessary to arrange for the recovery means to "roll back" the non-failed live processes to states consistent with the one into which the replacement process can be put.

A recently-proposed distributed fault tolerant system named "Manetho" avoids the need to roll-back the non-failed recovery units whilst not requiring excessive overhead in terms of checkpointing or keeping duplicate processes in step. "Manetho" is described in a number of publically-available documents including:
1) - "Manetho: Transparent Rollback-Recovery with Low Overhead, Limited Rollback and Fast Output Commit" Elmootazbellah N.Elnozahy and Willy Zwaenepoel, IEEE Transactions on Computers Special Issue on Fault-Tolerant Computing, 41(5) :526-531, May 1992.
2) - "An Empirical Evaluation of Three Multicast Protocols in the Context of Active Replication" Elmootazbellah N.Elnozahy and Willy Zwaenepoel, Department of Computer Science, Rice University, Houston, Texas, July 9,1993.
3) - "Manetho: Fault Tolerance in Distributed Systems Using Rollback-Recovery and Process Replication" Elmootazbellah N.Elnozahy, Computer Science Technical Report, Rice University, Houston, Texas, Rice COMP TR93-212, October 1993
Reference is directed to the above documents for a full description of Manetho.

Whilst there are several variants of Manetho, they all generally function as follows:
(i) - State information on the live process of each recovery unit is maintained separately from the process running the live process (this state information may be held on secure storage or may be the state of a duplicate process running on a different process but shadowing the live process). This state information is periodically updated, the updating preferably being done in a consistent manner across all recovery units. (Although maintaining this state information is effectively a recovery-information logging function, it is here separated from the logging function described below because it may, in the case of the duplicate process approach, be in part implemented by having sending processes multicast their messages to the destination live process and its duplicates; in contrast, the logging function is more closely associated with its live process).
(ii) - A logging function associated with the live process of each recovery unit maintains an "antecedence graph" (to be explained in more detail below) which records the sequencing across all recovery units of non-deterministic events experienced by all the live processes. The antecedence graph also contains sufficient data on non-deterministic events that are not messages to enable their replay. Whenever the live process of a recovery unit undertakes an action having consequences beyond itself, the associated logging function causes its antecedence graph (or the most recent part of it) to be safeguarded. Thus, on the sending of a message to another live process, the logging function of the sending process piggy-backs its antecedence graph information on the message, whilst whenever a live process generates an external world output its logging function first passes on its antecedence graph information to secure store or to its duplicate process. Upon a live process receiving a message from another, its associated logging function uses the antecedence graph information piggy-backed on the message to update its own record of the antecedence graph.
(iii) - The logging function of each recovery unit maintains a log of the messages sent out by the associated live process
(iv) - On failure of a live process, the recovery means of the recovery unit causes a replacement process to be rolled forward from a state corresponding to the latest-stored state information on the failed process, to a state consistent with the system outside of the recovery unit containing the failed process. This is achieved by first reconstructing a complete antecedence graph from the fragments stored in other recovery units and the secure storage, and then replaying the non-deterministic events recorded for the failed process. In doing this, where a non-deterministic event to be replayed is the receipt of a message, the corresponding message is fetched from the sent message log of the appropriate recovery unit. During this rolling forward process, where the replacement process would normally output a message, this output is suppressed but the message is still stored in the sent message log for the process.

It is because the logging function associated with the failed process output its antecedence graph information whenever the live process undertook an externally-visible action, that it is possible to roll forward the replacement process at least to a state consistent with all other live processes. It is, of course, possible that the failed process experienced a non-deterministic event after the last output of its associated antecedence graph information. Whilst the Manetho procedures do not capture such an event and cannot therefore guarantee that the replacement process will ever attain the same state as the failed process at failure, this is invisible to the other recovery units.

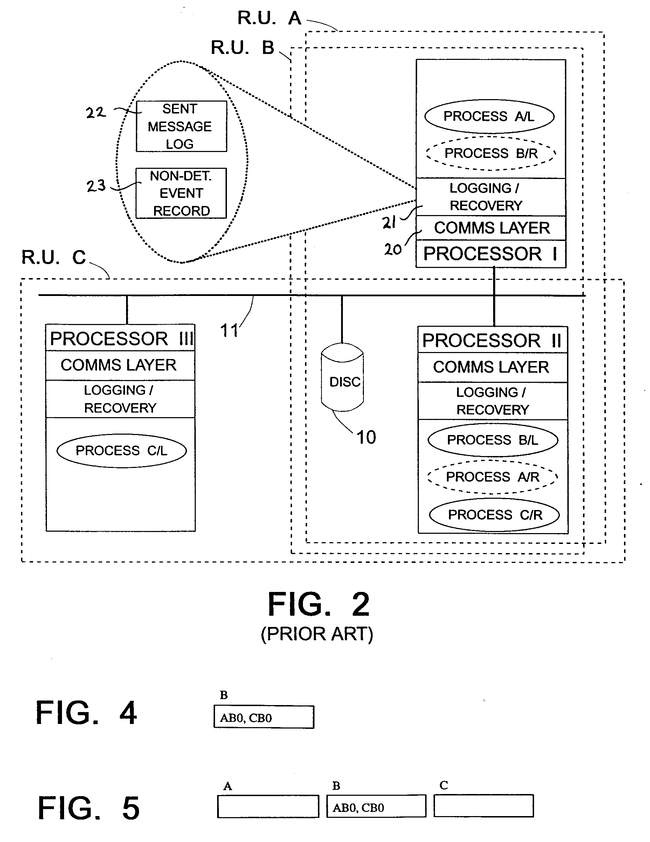

Figure 2 of the accompanying drawings is a diagram of a Manetho system variant comprising three recovery units A, B, C of which recovery units A and B store state information on their live processes on disc 10 whilst recovery unit C maintains a duplicate process for storing state information on its live process. More particularly, recovery unit A has its live process A/L running on processor I with processor II designated to run its replacement process A/R, recovery unit B has its live process B/L running on processor II with processor I designated to run its replacement process B/R, and recovery unit C has its live process C/L running on processor III and a duplicate process C/R running on processor II.

Associated with each processor I, II, III is a communication layer 20 providing for communication between the processors and with the disc 10 over the LAN 11, and an FT layer 21 providing both logging and recovery functions. For recovery unit A, the FT layer 21 associated with processor I provides logging functionality, maintaining an in-memory sent message log 22 and a non-deterministic event record 23 (antecedence graph) for the live process A/L; this FT layer 21 also periodically logs state information on live process A/L to the disc ID. The FT layer 21 associated with processor II provides recovery functionality for recovery unit A, bringing up the replacement process A/R on processor II upon failure of live process A/L being detected (in whatever manner). In a similar manner, the logging and recovery functionality associated with recovery unit B are provided by the FT Layers 21 associated with the processors II and I respectively whilst the logging and recovery functionality associated with recovery unit C are provided by the FT layers 21 associated with the processors III and II respectively.

Figure 3 of the accompanying drawings illustrates an example antecedence graph for the Figure 2 system. Each horizontal trace represents the execution history of the live process of a respective recovery unit in terms of the sequence of states gone through by the live process. These states are collapsed into groups lying between non-deterministic events experienced by the live process, each group being termed a state interval and being represented by a node N in the corresponding horizontal trace. In Figure 3 a node notation is used for which the node superscript of node N is the recovery process concerned and the subscript is the node number for that recovery unit.

The edges of the graph between nodes N indicate the relation between the state intervals concerned in terms of which state interval happened before another. The structure and contents of a graph node N depends on the type of non-deterministic event marking the creation of the corresponding state interval:
- For a state interval created by the reception of message, the corresponding graph node N has two incoming edges, one from the node representing the previous state interval and one from the node representing the sender's state interval during which the message was sent. For example, considering node N₁^{B} in Figure 3, this represents a state interval for live process B/L initiated by the receipt of a message from live process C/L. The node contains unique identifiers for the node itself and for the message (including sender identification, but not the message itself).
- For a state interval created by an input event, the corresponding graph node N (for example, node N₁^{C}) has only one incoming edge this being from the node representing the previous state interval for the same recovery unit; the node contains unique identifiers for the node itself and the input event together with full details of that event.
- For a state interval created by an internal event, the corresponding graph node N (for example, node N₁^{A}) has only one incoming edge, again from the node representing the previous state interval for the same recovery unit. The node contains a unique identifier of the node itself and sufficient information to renable replay of the internal event.
It will be appreciated that the antecedence graph is a complex data structure particularly bearing in mind that new fragments received from another process continually have to be integrated into the antecedence graph record maintained by the logging functionality associated with each recovery unit. A similar problem is encountered by the recovery means when reconstructing the antecedence graph prior to rolling forward a replacement process following failure of live process.

In recognition of this complexity, in the second of the above cited Manetho references, four measures are proposed for efficient graph maintenance (see page 4 of that reference). These measures are:
1 - the use of the incremental piggy-backing;
2 - spooling the antecedence graph asynchronously to stable storage;
3 - when a process sends a stream of messages to another process, using only one node to indicate this transfer;
4 - when a process sends a message to another process, omitting to append any nodes that belong to a state interval of that other process or its antecedents.

However, notwithstanding these measures, the antecedence graph is still a complex data structure requiring substantial processing and data transfer for its maintenance.

It is an object of the present invention to provide a simplified form of non-deterministic event record for fault-tolerant systems of the same general form as Manetho.

### Summary of the Invention

In general terms, the present invention involves replacing the antecedence graph of Manetho with an antecedence vector recording the sequence of non-deterministic events experienced by each live process. It is possible to do this because the cross links in the antecedence graph inter-relating state events in different recovery units, are not needed to permit roll forward of a replacement process during recovery. Thus, provided the non-deterministic event record is not used for a purpose where the cross links are needed, the substitution of the aforesaid antecedence vector for the antecedence graph is permissible. As will be appreciated, maintenance of such a vector is much easier than maintenance of the antecedence graph.

More formally stated, according to one aspect of the present invention, there is provided a fault tolerant computer system comprising a plurality of processors running processes that exchange messages with each other and progress through a succession of states in dependence on non-deterministic events experienced thereby, the non-deterministic events experienced by a said process comprising any said messages received thereby, the system being organised as a plurality of recovery units each of which comprises:
-- a live process running on one said processor;
-- logging means also running on said one processor for maintaining both a log of outgoing messages sent by the live process of the same recovery unit and a non-deterministic event record recording sequencing information on the non-deterministic events experienced by all said live processes, the logging means associating with each message output by the live process of the same recovery unit, event data comprising at least a most recent portion of its non-deterministic event record;
-- historic-state means for maintaining, separate from said one processor, state information on a recent state of the live process of the same recovery unit;
-- recovery means separate from said one processor and responsive to failure of said live process to use said state information held in the historic-state means of the same recovery unit together with the message logs and non-deterministic event records of other recovery units, to bring up said replacement process on an operative said processor in a said state consistent with the system outside of the recovery unit that includes the failed live process;
characterised in that said non-deterministic event record maintained by the logging means of each recovery unit comprises a respective execution history for each said live process, each said execution history recording the sequence of non-deterministic events experienced by the corresponding live process as known to the logging means maintaining said non-deterministic event record, said record being without a correlation of the sequencing of events as between live processes.

### Brief Description of the Drawings

In the drawings:
- **Figure 1**: is, as already described, a diagram illustrating the division of a fault-tolerant computer system into two recovery units according to known principles;
- **Figure 2**: is, as already described, a diagram illustrating an example fault-tolerant computer system generally in accordance with the known Manetho system;
- **Figure 3**: is, as already described, a diagram of an example antecedence graph as used in the known Manetho system;
- **Figure 4**: is a diagram of an execution history of live process, such as one of the live processes of the Figure 2 system;
- **Figure 5**: is a diagram of an antecedence vector made up of the execution histories of all live processes of a system such as that of Figure 2, the antecedence vector being used according to the present invention in substitution for the Figure 3 antecedence graph; and
- **Figures 6 (a) to (f)**: each show the form of the antecedence vector maintained in each recovery unit A, B, C of a system in which the present invention is implemented, Figures 6 (a)-(f) showing the progressive building of the antecedence vector in each recovery unit as an example sequence of events is experienced by these units.

### Description of the Preferred Embodiment

In the following description the use of an antecedence vector to record non-deterministic event information is described, by way of example, with reference to a system having three recovery units A, B, C such as illustrated in Figure 2. This antecedence vector replaces the antecedence graph of Figure 3 so far as the logging and recovery operations of the Figure 2 system, the only difference in operation being the simplification of the construction of the antecedence vector as compared with the antecedence graph. Because of this generally unchanged overall operation of the Figure 2 system, the description of the operation of the Figure 2 system will not be repeated below and most of the teaching of the three Manetho references cited above is also applicable to systems implementing the present invention.

Considering first Figure 4, this illustrates an example execution history for the live process B/L of the recovery unit B of the Figure 2 system. The execution history comprises the sequence of non-deterministic events experienced by a recovery unit (that is, by the live process of the recovery unit). In the following example event sequences experienced by the three recovery units A, B, C of the Figure 2 system, only message events have been considered simply for convenience; the incorporation of non-deterministic events other than messages into the execution histories and the antecedence vector of the live process, presents no particular problem and their omission here does not alter the validity of the following description. With respect to the Figure 4 execution history, this is shown as recording the receipt by the recovery unit B of message ABO from recovery unit A followed by a message CBO from recovery unit C.

The set of the execution histories of all recovery units constitutes the antecedence vector of the system. Figure 5 illustrates the antecedence vector corresponding to recovery unit B having the antecedence history of Figure 4 but with recovery units A, C not yet having received any messages.

As with the antecedence graph, each recovery unit A, B, C of the Figure 2 system builds its own version of the antecedence vector from the latest information it has.

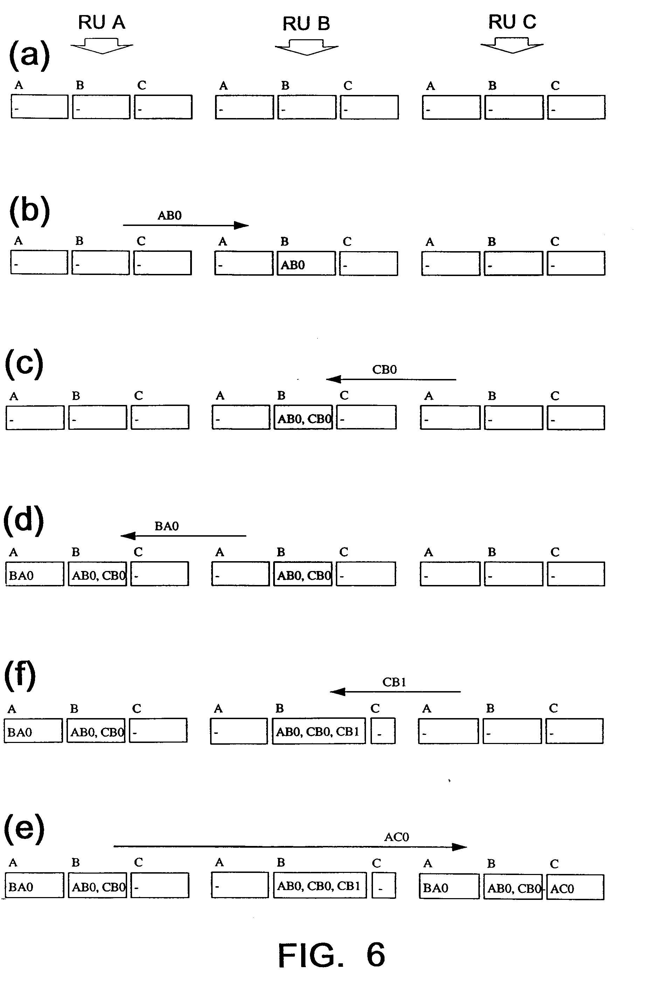

Turning now to the Figure 6 example of the progressive construction of the antecedence vector by the recovery units A, B, C, Figure 6(a) illustrates the initial condition where the antecedence vector at each recovery unit is empty.

Recovery unit A now sends a message ABO to recovery unit B. Recovery unit B consumes this message and the logging function associated with the live process B/L adds this message event to the execution history for recovery unit B in the latter's version of the antecedence vector (see Figure 6b).

Next, recovery unit C sends a message CBO to recovery unit B and this is similarly processed with the execution history for recovery unit B in the latter's version of the antecedence vector being updated to add the fact that message CBO has been received after message ABO (see Figure 6c).

Note that in general the other recovery units A, C will have an out-of-date version of B's execution history. Thus, if processor II now fails causing failure of live process B/L, the event order information contained in B's execution history previously maintained on processor II is lost together with the resultant state reached by processor B/L. The replacement process B/R is then brought up on processor I but cannot be rolled forward as no event information on recovery unit B is available in the antecedence vector maintained by recovery units A, C. However, this is completely acceptable as the replacement process B/R is in a state consistent with the other recovery units, the failed process B/L not having output any messages. The system is preferably arranged such that the recovery units A, C detect the fact that the messages ABO and CBO respectively have not been received by the replacement process B/R; the recovery units A, C thereafter re-send these messages to the recovery unit B. Of course, these re-sent messages may be consumed by the recovery unit B in any order, for example CBO, ABO; that this order is different from the original order of receipt does not lead to any inconsistency because the state of the recovery unit brought about by the original messages was not seen outside of B.

Continuing now on the basis that recovery unit B did not fail, this unit next sends a message BAO to recovery unit A and in doing so piggybacks its version of the antecedence vector (including its own execution history) onto the message. In fact, for reasons of efficiency, only that part of the antecedence vector not known to be at A is sent (the simplest way of implementing this is for B to keep a record of the state of its antecedence vector when last sent to each recovery unit). When the message BAO arrives at recovery unit A, the piggybacked antecedence vector is merged with the version of the antecedence vector maintained by A; thereafter the message is delivered to the live process A/L and a new entry is made at A in the execution history of recovery unit A (see Figure 6d)
Figure 6(e) shows the result of a subsequent message CBI sent from recovery unit C to recovery unit B whilst Figure 6(f) shows the result of a following message sent from recovery unit A to recovery unit C. As a result of this latter message, recovery unit C finally gains information on the execution histories of both recovery units A and B.

If now the process II should fail, causing failure of the live process B/L, the recovery functionality associated with the replacement process B/L on processor I can reconstruct the execution history of recovery unit B by obtaining the antecedence vectors from units A and C. The reconstructed execution history of B does not include receipt of the message CB1 but this is acceptable as the results of the processing carried out by the process B/L prior to failure were not made visible outside of recovery unit B.

Using the reconstructed execution history for B (composed of messages ABO, CBO in that order), the replacement process B/L is rolled forward by fetching and replaying the messages ABO and CBO in that order from the sent message logs maintained by recovery units A and C respectively.

It will be appreciated that the present invention is not limited to the particular forms of Manetho described in the above-cited references. For example, whereas in the versions of Manetho using process replication for fast recovery, a multicast protocol is used to send a message from the sending recovery unit to all the primary and secondary processes of the receiving recovery unit, it is equally feasible to have each message sent only to the relevant primary process and then arrange for that process to update its secondaries (either immediately or on a lazy basis where the messages are passed to the secondaries simply when convenient to do so).

## Claims

1. A fault tolerant computer system comprising a plurality of processors running processes that exchange messages with each other and progress through a succession of states in dependence on non-deterministic events experienced thereby, the non-deterministic events experienced by a said process comprising any said messages received thereby, the system being organised as a plurality of recovery units each of which comprises:
-- a live process running on one said processor;
-- logging means also running on said one processor for maintaining both a log of outgoing messages sent by the live process of the same recovery unit and a non-deterministic event record recording sequencing information on the non-deterministic events experienced by all said live processes, the logging means associating with each message output by the live process of the same recovery unit, event data comprising at least a most recent portion of its non-deterministic event record;
-- historic-state means for maintaining, separate from said one processor, state information on a recent state of the live process of the same recovery unit;
-- recovery means separate from said one processor and responsive to failure of said live process to use said state information held in the historic-state means of the same recovery unit together with the message logs and non-deterministic event records of other recovery units, to bring up said replacement process on an operative said processor in a said state consistent with the system outside of the recovery unit that includes the failed live process;
characterised in that said non-deterministic event record maintained by the logging means of each recovery unit comprises a respective execution history for each said live process, each said execution history recording the sequence of non-deterministic events experienced by the corresponding live process as known to the logging means maintaining said non-deterministic event record, said record being without a correlation of the sequencing of events as between live processes.

2. A fault tolerant computer system according to claim 1, wherein for at least one said recovery unit said historic-state means comprises disc storage means for storing said state information, and checkpointing means running on the same said one processor as the live process of the recovery unit concerned and operative periodically to download said state information to said disc storage means.

3. A fault tolerant computer system according to claim 1, wherein for at least one said recovery unit said historic-state means comprises a duplicate process corresponding to said live process of the recovery unit concerned but running on a different said processor to the live process, and forwarding means for passing to said duplicate process non-deterministic events relevant to said live process whereby the state of said duplicate process provides said state information on said live process.

4. A fault tolerant computer system according to claim 3, wherein said forwarding means comprises message brodcast means for broadcasting each message sent by the live process of each recovery unit, to both the live and duplicate processes of the recovery unit to which the message is sent.

5. A fault tolerant computer system according to claim 3, wherein said forwarding means comprises means for forwarding to said duplicate process messages processed by the corresponding said live process.
